# EUROPÄISCHE PATENTSCHRIFT

(11) **EP 0 873 676 B1**
(45) Veröffentlichungstag und Bekanntmachung des Hinweises auf die Patenterteilung: **02.07.2003**
(21) Anmeldenummer: 98106682.2
(22) Anmeldetag: 11.04.1998
(51) Int. Cl.: A01C 7/08, A01C 15/04

(54) **Verteiler für pneumatische Drillmaschine**
Distributor for pneumatic seeddrill
Distributeur pour semoir pneumatique

(30) Priorität: 24.04.1997 DE 19717214
(43) Veröffentlichungstag der Anmeldung: 28.10.1998
(73) Patentinhaber: Lemken GmbH & Co. KG, 46519 Alpen (DE)
(72) Erfinder: Siebers, Josef, 46509 Xanten (DE)
(74) Vertreter: Schulte, Jörg, Dipl.-Ing.

(56) Entgegenhaltungen:
- CA-A- 1 097 149
- DE-A- 2 519 760
- DE-B- 1 287 350

## Beschreibung

Die Erfindung betrifft eine pneumatische Drillmaschine bzw. Sämaschine mit Säscharen oder Saatgutausläufen, die über Rohr- bzw. Schlauchleitungen, Verteiler mit vorgeordnetem Wirbelrohr und Zuführrohren mit dem Saatgutbehälter verbunden sind, wobei das Wirbelrohr sinusförmige, quer zur Flussrichtung verlaufende, dicht aufeinanderfolgend angeordnete Wirbelsegmente aufweist.

Bei derartigen Maschinen wird das Saatgut über entsprechende Fördereinrichtungen aus dem Saatgutbehälter über Zuführrohre, Verteiler und Schlauchleitungen pneumatisch zum Säschar oder Saatgutauslauf, z. B. Doppelscheibensäschar gefördert. Dabei wird das Saatgut in von den Säscharen geformte Särillen abgelegt oder ganzflächig verteilt. Bei bekannten, aus der EP-A1-0 748 580 bekannten Ausführungen dienen mehrere Verteiler als Verteileinrichtungen für die einzelnen Säschare. Diesen Verteilern sind sehr lange Wirbelrohre vorgeordnet, so dass die gesamte Einheit aufgrund der langen Wirbelrohre sehr hoch baut. Die langen Wirbelrohre werden eingesetzt, um den Saatgutstrom zu verwirbeln und gleichmäßig dem Verteiler zuzuführen, über den sie dann über die Ausläufe in die einzelnen Schlauchleitungen und dann zu den Säscharen gelangen. Die Verteiler mit den langen Wirbelrohren haben den Nachteil, dass sie bei klappbaren Säschienen gegeneinander stoßen oder um diese Einklappung zu ermöglichen, versetzt zueinander angeordnet sein müssen. Zusätzlich sind die bekannten Verteiler sehr aufwendig aufgebaut und daher teuer, wobei sie nachteilig groß bauen, um die angestrebte, gleichmäßige Verteilung des Saatgutes auf die einzelnen Schlauchleitungen zu sichern. Hochbauende Verteiler haben zusätzlich den Nachteil, dass eine verhältnismäßig hohe Luftleistung und damit ein großes und teures Gebläse benötigt wird. Aus der CA-A-1097149 ist eine pneumatische Drillmaschine bekannt, die zusätzlich ein Wirbelrohr mit sinusförmigen, rechtwinklig zur Fließrichtung verlaufenden Wirbelsegmenten ausgerüstet ist. Die Vielzahl an Wirbelsegmenten führt zu großen Bauhöhen und den weiteren, oben beschriebenen Nachteilen.

Der Erfindung liegt die Aufgabe zugrunde, eine pneumatische Drillmaschine mit niedrig bauenden und einfach zu montierendem Verteiler zu schaffen.

Die Aufgabe wird gemäß der Erfindung dadurch gelöst, dass Wirbelrohr und Verteiler einteilig ausgebildet sind, dass das Wirbelrohr kürzer als 15 cm und mit drei bis fünf ineinander übergehenden Wirbelsegmenten ausgerüstet ist.

Aufgrund dieser besonderen Ausbildung von Verteiler und Wirbelrohr kann nicht nur eine kostengünstige Einheit geschaffen werden, sondern auch eine niedrig bauende Einheit, die somit auch bei klappbar ausgebildeten Säschienen das Einklappen dieser Bauteile nicht behindert. Diese günstige Bauform und Bauhöhe erreicht man durch die Integrierung des Wirbelrohrs und des Verteilers zu einer Baueinheit, d. h. durch Vermeidung von Übergangsrohren u. ä. und durch die sehr kompakte Ausbildung des Wirbelrohres, das zur Erzielung der notwendigen Verwirbelung des Saatgutes die entsprechend in den Querschnitt hereinragende sinusförmige und quer zur Fließrichtung verlaufende Wirbelsegmente aufweist. Im Gegensatz zu den bekannten faltenbalgartigen oder auch langen Wirbelrohren sind hier sehr kompakte und den Fluss des Saatgutes gezielt beeinflussende Wirbelsegmente geschaffen, die eine ausgezeichnete Verwirbelung des Saatgutstromes bewirken. Die kurze Ausbildung des Wirbelrohres wird dabei durch drei bis fünf ineinander übergehende sinusförmige Wirbelsegmente erreicht und damit eine sehr kurz bauende Gesamteinheit. Diese Gesamtbaueinheit ist kürzer als 15 cm, so dass auch bei einklappbaren Säschienen aufgrund der kompakten Bauweise ein problemloses Einklappen möglich ist, ohne dass die Schlauchleitungen sich behindern und ohne die Verteiler versetzt anordnen zu müssen.

Bei pneumatischen Drillmaschinen wird nach einer zweckmäßigen Ausbildung das Saatgut aus dem Saatgutbehälter in ein horizontales Zuführrohr übergeben und über einen 90°-Bogen und dieses und das Wirbelrohr in den Verteiler geleitet. Das Wirbelrohr schließt praktisch unmittelbar an den 90°-Bogen an und sichert dadurch und aufgrund der kurzen Länge die kompakte Bauweise und niedrige Bauhöhe der Einheit aus Bogen, Wirbelrohr und Verteiler. Um die Verteilgenauigkeit zu optimieren ist vorgesehen, dass der 90°-Bogen auf der Bogennaußenseite mit einer Verteilnase versehen ist. Die Verteilnase sorgt dafür, dass der Saatgutstrom stabilisiert wird und nach Durchlauf durch das Wirbelrohr gleichmäßig durch den Verteiler verteilt wird.

Beschädigungen an dem Saatgut werden verhindert und gleichzeitig eine möglichst gleichmäßige Verteilung sichergestellt, wenn wie erfindungsgemäß vorgeschlagen, die Verteilnase als Rundprofil ausgebildet ist, das einen Durchmesser aufweist, der etwa einem Drittel des Durchmessers des Zuführrohres entspricht. Damit wird ein bereits vorverteilter Saatgutstrom in das Wirbelrohr, was zu einer verbesserten Verteilgenauigkeit wesentlich beiträgt. Während der Bearbeitung des Ackers, d. h. des Einbringens des Saatgutes, kann es zu unterschiedlichen Stellungen der Drillmaschine kommen, wobei gemäß der Erfindung durch die Verteilnase eine exzellente Verteilgenauigkeit auch in extremen Hanglagen sichergestellt wird, so dass die angesprochene Verteilgenauigkeit auch unter solchen extremen Bedingungen gewahrt bleibt. Dabei kann auf sonst übliche unterstützende Hilfsmittel wie Sensoren, Computer/GPS usw. verzichtet werden.

Ebenfalls einer optimalen Verteilgenauigkeit dient eine Ausbildung der Erfindung, nach der die den Verteiler mit den Säscharen verbindenden Schlauchleitungen in ihrer Länge um nicht mehr als 10 % voneinander abweichend, vorzugsweise sowohl in der Länge wie dem Durchmesser gleich ausgebildet sind. Durch gleiche Staudruckverhältnisse in allen diesen Schlauchleitungen ist sichergestellt, dass ein nach-teilhafter Einfluss auf die Verteilgenauigkeit gar nicht erst auftreten kann.

Bei einklappbar ausgebildeten Säschienen oder Säeinheiten ist vorgesehen, dass je Teileinheit ein oder mehrere Verteiler vorgesehen sind, wobei die Säschare oder die Saatgutausläufe entsprechenden Säschienen zugeordnet sind. Da mehrere Verteiler vorgesehen sind, können die Leitungen vom Verteiler zu den Säscharen kurz gehalten werden, was zusätzlich den Vorteil beinhaltet, dass ein kleines und damit kostengünstiges Gebläse eingesetzt werden können.

Die Verteilgenauigkeit wird ergänzend dadurch beeinflusst und optimiert, dass der Deckel innenseitig mit einem kegelförmigen Führungskörper ausgerüstet ist, dessen Spitze bis an den Übergang zum Wirbelrohr heranreicht und in dem mit den Ausläufen korrespondierende Führungsrillen vorgesehen sind. Weiter vorn ist bereits darauf hingewiesen worden, dass damit eine frühzeitige und genaue Führung der einzelnen auf den Führungskörper auftreffenden Saatgutkörner möglich wird. Diese werden ohne weiter "vom Weg abzukommen" gleich in den zuständigen Auslauf hineingeführt und von dort dem jeweiligen Säschar übergeben. Die Führungsrillen im Deckel sind den Ausläufen entsprechend ausgebildet und auch angeordnet. Die weit vorreichende Spitze des Führungskörpers bringt die vorteilhaft gleichmäßige Verteilung über den gesamten Querschnitt gesehen, wobei weiter vorgesehen ist, dass die Einheit aus Wirbelrohr und Verteiler aus Kunststoff hergestellt ist. Dadurch wird eine einfache und kostengünstige Herstellung und eine einfache Handhabung der gesamten Einheit ermöglicht.

Die Erfindung zeichnet sich insbesondere dadurch aus, dass eine Drillmaschine geschaffen ist, die kompakte und kostengünstige Verteiler besitzt, die in Verbindung mit der Verteilnase und den weiteren Einzelheiten zu einer unübertroffenen Verteilgenauigkeit führt und einfach zu montieren und zu warten ist.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: eine Drillmaschine in Seitenansicht,
- Fig. 2: eine Säschiene in Seitenansicht im ausgeklappten und eingeklappten Zustand,
- Fig. 3: ein Verteiler mit Wirbelrohr im Schnitt,
- Fig. 4: eine Draufsicht auf den 90°-Bogen vor dem Wirbelrohr und
- Fig. 5: eine Draufsicht auf einen Verteiler mit angesetzten

### Schlauchleitungen.

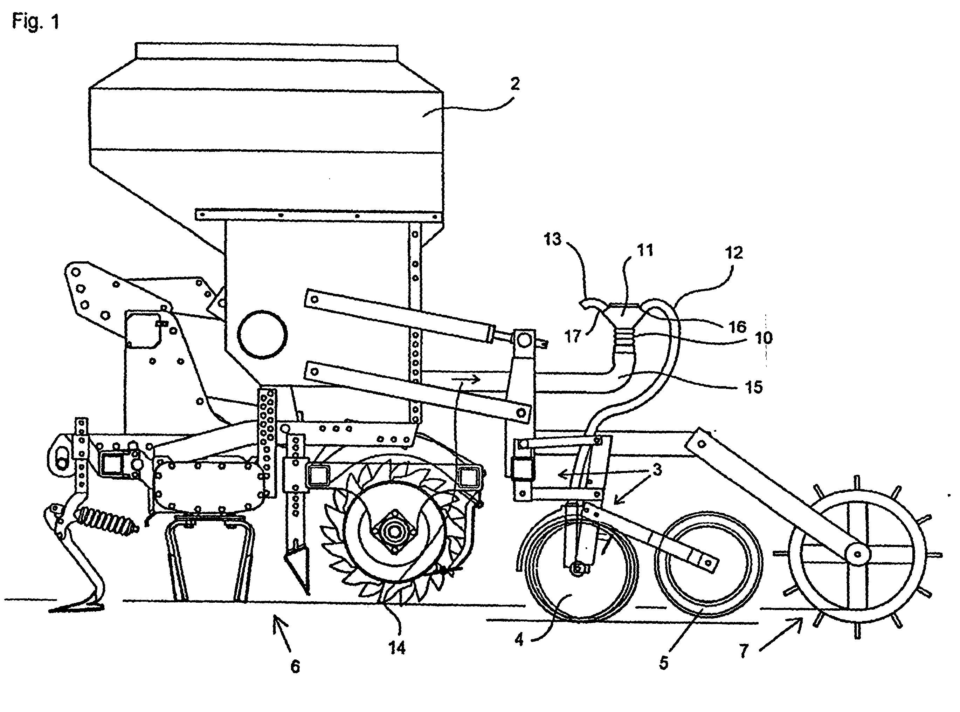

Fig. 1 zeigt eine pneumatische Drillmaschine 1 in Seitenansicht, wobei der oben aufsitzende Saatgutbehälter 2 sehr gut sichtbar ist. An den Saatgutbehälter 2 angeschlossen ist eine Säschiene 3, die mit mehreren Säscharen 4 bestückt ist. Die Säschare 4 werden über nachgeordnete Druckrollen 5 in der Tiefe geführt.

Die Drillmaschine 1 ist auf eine Kreiselegge 6 aufgebaut. Über das Spornrad 7 wird die nicht dargestellte Sänelle angetrieben.

Das per Särad bzw. Säräder aus dem Saatgutbehälter 2 geförderte Saatgut wird mittels eines nicht dargestellten Gebläses über das Zuführrohr 9 und dem 90°-Bogen 15 den einzelnen, mit einem vorgeordneten Wirbelrohr 10 ausgenisteten Verteilern 11 zugeführt. Von hier aus gelangen die einzelnen Saatgutkörner über die Schlauchleitungen 12, 13 zu den einzelnen Säscharen 4.

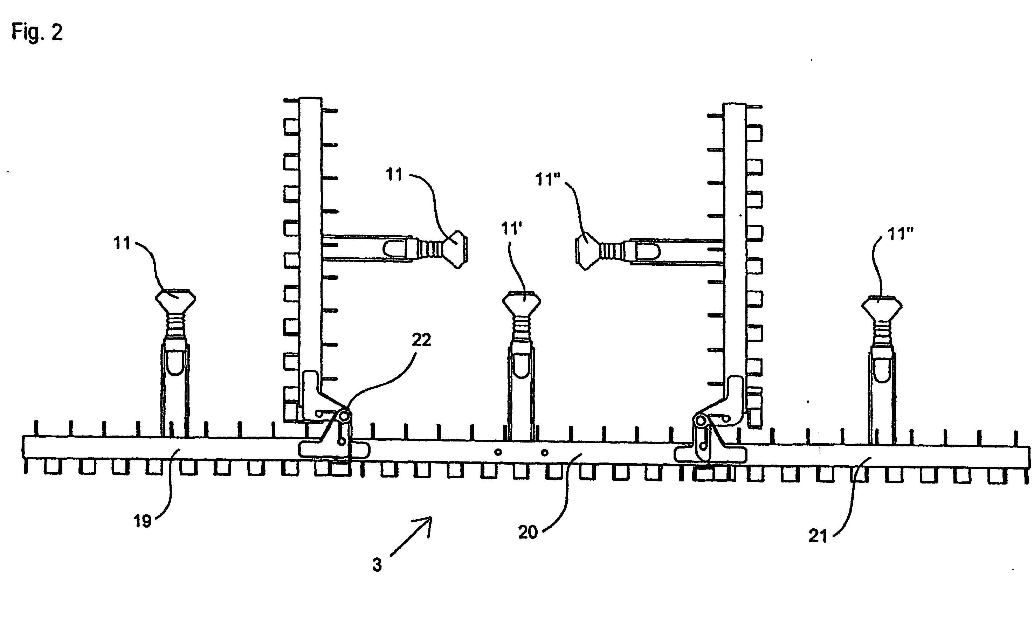

Fig. 2 zeigt eine Säschiene 3 in Draufsicht, wobei verdeutlicht ist, dass diese Säschiene 3 aus einzelnen Teileinheiten 19, 20, 21 zusammengesetzt ist, die um Gelenke 22 verschwenkt werden können und zwar in die gestrichelt wiedergegebene Position. Deutlich erkennbar ist, dass die Verteiler 11, 11', 11" sich beim einklappen keineswegs behindern, vielmehr ist ein entsprechender Schwenkvorgang problemlos möglich.

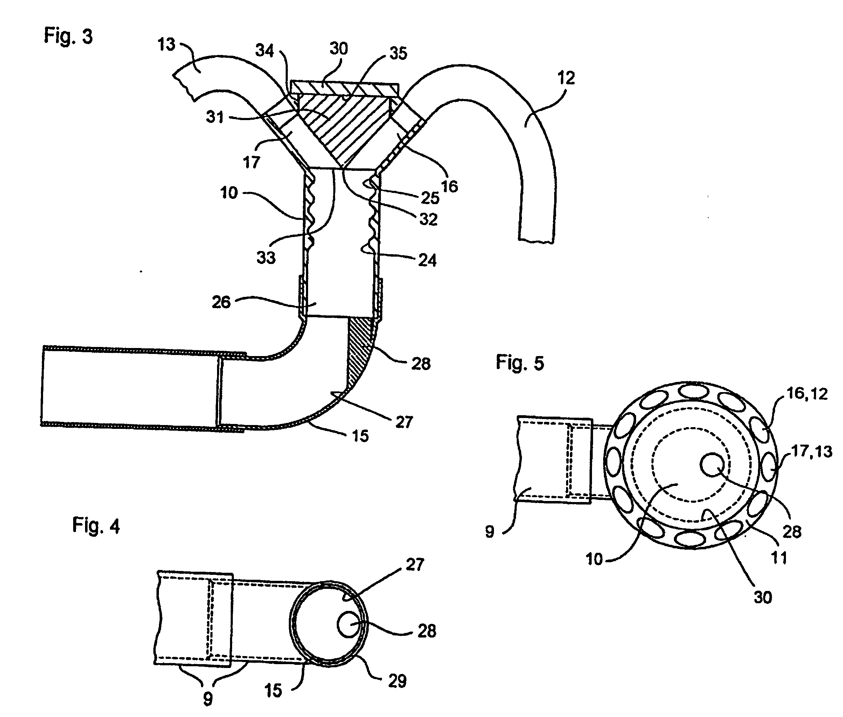

Fig. 3 schließlich zeigt einen Schnitt durch die eine Einheit bildenden Wirbelrohr 10 und Verteiler 11. Dem Wirbelrohr 10 ist ein 90°-Bogen 15 vorgeordnet und der Verteiler 11 mit den Ausläufe 16, 17 in Fließrichtung 14 nachgeordnet. Fig. 3 verdeutlicht, die geringe Bauhöhe der Verteileinheit mit 90°-Bogen 15, Wirbelrohr 10 und Verteiler 11 und auch die einstückige Ausbildung des Wirbelrohr 10 und Verteiler 11.

Bei der in Fig. 3 wiedergegebenen Ausführungsform sind insgesamt vier Wirbelsegmente 24, 25 vorgesehen, die sinusförmig ausgebildet sind und die entsprechend weit in den Querschnitt des Wirbelrohres 10 hineinreichen.

Ebenfalls der Verteilgenauigkeit dient eine Ausbildung des 90°-Bogens 15, der ebenfalls Fig. 3, aber auch Fig. 4 entnommen werden kann. Deutlich wird, dass im Außenbogen 29 auf der Bogeninnenseite 27 eine Verteilnase 28 angeordnet ist, die im Übergangsbereich 26 endet und dafür sorgt, dass der in Fließrichtung 14 strömende Saatgutstrom geteilt und vorverwirbelt wird. Dadurch wird trotz des kurzen Wirbelrohres 10 und trotz der geringen Bauhöhe eine ausgezeichnete Verteilgenauigkeit erzielt. Bei der hier wiedergegebenen Ausbildung der Verteilnase 28 ist eine runde Ausführung wiedergegeben, quasi ein Rundstück, das in den Außenbogen 29 eingesetzt ist.

Auch Fig. 5 verdeutlicht noch einmal die besondere Position der Verteilnase 28 im Wirbelrohr 10 bzw. genauer gesagt im 90°-Bogen 15. Erkennbar ist in Fig. 5 außerdem, dass eine Vielzahl von Schlauchleitungen 12, 13 bzw. Ausläufen 16, 17 über den kreisrunden Querschnitt des Verteilers 11 angeordnet sind. Das Verteilergehäuse verfügt über einen Deckel 30 mit einem jeweils korrespondierenden Gewinde 34, so dass der Deckel 30 bei Bedarf leicht herausgeschraubt werden kann.

Auf der Innenseite 35 des Deckels 30 ist eine kegelförmiger Führungskörper 31 angeordnet, deren Spitze 32 bis in den Übergang 33 zum Wirbelrohr 10 hineinreicht. Erkennbar ist, dass durch diese besondere Form des Führungskörpers 31 bzw. der Innenseite 35 des Deckels 30, der mit entsprechenden, hier nicht dargestellten Rillen ausgerüstet sein kann, eine gleichmäßige Verteilung der auftreffenden Saatgutkörner erreicht ist, die über den Verteiler 11 in die Schlauchleitungen 12, 13 hineingeführt werden. Von hier aus können sie dann durch die gleich lang und im Querschnitt gleich ausgebildeten Schlauchleitungen 12, 13 bis in das Säschar 4 hineingeführt werden.

Ergänzend sei noch einmal auf die Führung des Saatgutstromes abgehoben. Dieser wird über das Särad und das Zuführrohr 9 aus dem Saatgutbehälter 2 herangeführt. Es durchläuft den Bogen 15 und wird bereits durch die Verteilnase 28 vorverwirbelt und gelangt dann in das Wirbelrohr 10, das mit Unterstützung der besonderen Ausbildung des Deckels 30 für eine sehr gute Verteilgenauigkeit des Saatgutes sorgt. Der Verteiler 11 weist mindestens sechs Ausläufe 16, 17 auf, an die die Schlauchleitungen 12, 13 anschliessen. Aufgrund der guten Verteilgenauigkeit des Verteilers 11 werden den Schlauchleitungen 12, 13 und damit den Säscharen 4 praktisch gleichviel Saatgutkörner pro Leitung zugeführt.

Der aus Kunststoff hergestellte Verteiler 11 ist korrosionsbeständig und von daher praktisch wartungsfrei. Der Verteiler 11 ist rund ausgebildet und kann daher als einfaches Drehteil bzw. Gussteil preisgünstig hergestellt werden. Der Deckel 30 des Verteilers 11 ist ebenfalls als einfaches Drehteil ausgebildet, was kostenmäßige Vorteile mit sich bringt und auch eine genaue Herstellung ermöglicht. Die Konstruktion lässt einen kleinen Verteiler 11 zu, der im Durchmesser kleiner als 18 cm, vorzugsweise ca. 15 cm ist, während die Länge des Wirbelrohres 10 nicht mehr als 15 cm misst.

## Patentansprüche

1. Pneumatische Drillmaschine (1) mit Säscharen (4) oder Saatgutausläufen, die über Rohr- bzw. Schlauchleitungen (12, 13), Verteiler (11) mit vorgeordnetem Wirbelrohr (10) und Zuführrohren (9) mit dem Saatgutbehälter (2) verbunden sind, wobei das Wirbelrohr (10) sinusförmige, quer zur Fließrichtung (14) verlaufende, dicht aufeinanderfolgend angeordnete Wirbelsegmente (24, 25) aufweist,
**dadurch gekennzeichnet,**
**dass** Verteiler (11) und Wirbelrohr (10) einteilig ausgebildet sind, dass das Wirbelrohr kürzer als 15 cm und mit drei bis fünf ineinander übergehenden Wirbelsegmenten (24, 25) ausgerüstet ist.

2. Drillmaschine nach Anspruch 1,
**dadurch gekennzeichnet,**
**dass** das Zuführrohr (9) einen etwa 90°-Bogen (15) aufweist, der an das Wirbelrohr (10) anschließt und im Übergangsbereich (26) auf der Bogeninnenseite (27) mit einer Verteilnase (28) versehen ist.

3. Drillmaschine nach einem der vorhergehenden Ansprüche,
**dadurch gekennzeichnet,**
**dass** die Verteilnase (28) als Rundprofil ausgebildet ist, das einen Durchmesser aufweist, der etwa einem Drittel des Durchmessers des Zuführrohres (9) entspricht.

4. Drillmaschine nach einem der vorhergehenden Ansprüche,
**dadurch gekennzeichnet,**
**dass** die den Verteiler (11) mit den Säscharen (4) verbindenden Schlauchleitungen (12, 13) in ihrer Länge um nicht mehr als 10 % voneinander abweichend, vorzugsweise sowohl in der Länge wie dem Durchmesser gleich ausgebildet sind.

5. Drillmaschine nach einem der vorhergehenden Ansprüche,
**dadurch gekennzeichnet,**
**dass** die Säschare (4) oder die Saatgutausläufe Säschienen (3) zugeordnet sind und dass bei einklappbar ausgebildeten Säschienen (3) oder Säeinheiten, je Teileinheit (19, 20, 21) ein oder mehrere Verteiler (11) vorgesehen sind.

6. Drillmaschine nach einem der vorhergehenden Ansprüche,
**dadurch gekennzeichnet,daß** der Verteiler mit einem Deckel ausgerüstet ist und dass der Deckel (30) innenseitig mit einer kegelförmigen Führungskörper (31) ausgerüstet ist, dessen Spitze (32) bis an den Übergang (33) zum Wirbelrohr (10) heranreicht.

7. Drillmaschine nach einem der vorhergehenden Ansprüche,
**dadurch gekennzeichnet,**
**dass** der Führungskörper (31) mit Führungsrillen ausgerüstet ist, die vorzugsweise mit den Ausläufen (16, 17) korrespondierend ausgebildet sind.

8. Drillmaschine nach einem der vorhergehenden Ansprüche,
**dadurch gekennzeichnet,**
**dass** die Einheit aus Wirbelrohr (10) und Verteiler (11) aus Kunststoff hergestellt ist.

## Claims

1. Pneumatic seed drill (1) comprising shares (4) or seed outlets, connected to the seed container (2) via pipe- or hoselines (12, 13), distributors (11) with an upstream vortex pipe (10) and supply pipes (9), the vortex pipe (10) having sinusoidal vortex segments (24, 25) extending transversely to the flow direction (14) and arranged close together consecutively, **characterised in that** the distributor (11) and vortex pipe (10) are formed in one piece, **in that** the vortex pipe is shorter than 15 cm and is equipped with three to five vortex segments (24, 25) which pass into one another.

2. Seed drill according to claim 1, **characterised in that** the supply pipe (9) has an approximately 90° bend (15) adjoining the vortex pipe (10) and is provided with a distributor nose (28) in the transition region (26) on the inner side of the bend (27).

3. Seed drill according to any one of the preceding claims, **characterised in that** the distributor nose (28) is designed as a round profile having a diameter corresponding to about a third of the diameter of the supply pipe (9).

4. Seed drill according to any one of the preceding claims, **characterised in that** the hose lines (12, 13) connecting the distributor (11) to the shares (4) differ from one another in length by no more than 10%, and are preferably formed to be identical in length and in diameter.

5. Seed drill according to any one of the preceding claims, **characterised in that** the shares (4) or the seed outlets are associated with sowing rails (3) and **in that** in the case of foldably designed sowing rails (3) or sowing units, one or more distributors (11) are provided per part unit (19, 20, 21).

6. Seed drill according to any one of the preceding claims, **characterised in that** the distributor is equipped with a cover and **in that** the cover (30) is equipped on the inside with a conical guide body (31), of which the tip (32) extends up to the transition (33) to the vortex pipe (10).

7. Seed drill according to any one of the preceding claims, **characterised in that** the guide body (31) is equipped with guide grooves, which are preferably designed to correspond with the outlets (16, 17).

8. Seed drill according to any one of the preceding claims, **characterised in that** the unit consisting of the vortex pipe (10) and distributor (11) is made from plastics material.

## Revendications

1. Semoir pneumatique (1) avec des socs d'ensemencement (4) ou des embouchures à semences, reliés au réservoir de semences (2) par l'intermédiaire de tubes ou de conduites flexibles (12, 13), d'un distributeur (11) avec tube de tourbillonnement (10) monté en amont et de conduites d'alimentation (9), le tube de tourbillonnement (10) comportant des segments de tourbillonnement (24, 25) sinusoïdaux, disposés transversalement au sens d'écoulement (14) et se succédant étroitement, **caractérisé en ce que** le distributeur (11) et le tube de tourbillonnement (10) sont configurés en une seule pièce, que la dimension du tube de tourbillonnement est inférieure à 15 cm et que celui-ci comporte trois à cinq segments de tourbillonnement (24, 25) se confondant les uns avec les autres.

2. Semoir selon la revendication 1, **caractérisé en ce que** la conduite d'alimentation (9) comporte un coude (15) de 90 ° environ, se rattachant au tube de tourbillonnement (10) et muni en zone de transition (26) sur le côté intérieur du coude (27) d'un nez de distribution (28).

3. Semoir selon l'une quelconque des revendications précédentes, **caractérisé en ce que** le nez de distribution (28) est configuré comme un profil rond, dont le diamètre correspond au tiers environ du diamètre de la conduite d'alimentation (9).

4. Semoir selon l'une quelconque des revendications précédentes, **caractérisé en ce que** les conduites flexibles (12, 13) reliant le distributeur (11) aux socs d'ensemencement (4) ont des différences de longueur de 10 % au maximum, préférentiellement les mêmes longueurs et diamètres.

5. Semoir selon l'une quelconque des revendications précédentes, **caractérisé en ce que** des rails d'ensemencement (3) sont affectés au soc d'ensemencement (4) ou aux embouchures à semences et qu'un ou plusieurs distributeurs (11) sont prévus par unité partielle (19, 20, 21), les rails d'ensemencement (3) ou les unités d'ensemencement étant configurés comme éléments rabattables.

6. Semoir selon l'une quelconque des revendications précédentes, **caractérisé en ce que** le distributeur est équipé d'un couvercle et que ce couvercle (30) est équipé à l'intérieur d'un corps de guidage (31) conique, dont la pointe (32) arrive jusqu'à la transition (33) au tube de tourbillonnement (10).

7. Semoir selon l'une quelconque des revendications précédentes, **caractérisé en ce que** le corps de guidage (31) est équipé de rainures de guidage qui sont préférentiellement configurées en correspondance avec les embouchures (16, 17).

8. Semoir selon l'une quelconque des revendications précédentes, **caractérisé en ce que** l'unité comprenant le tube de tourbillonnement (10) et le distributeur (11) sont fabriqués en matière synthétique.
